# EUROPÄISCHE PATENTSCHRIFT

(11) **EP 0 689 758 B1**
(45) Veröffentlichungstag und Bekanntmachung des Hinweises auf die Patenterteilung: **10.12.1997**
(21) Anmeldenummer: 95810381.4
(22) Anmeldetag: 08.06.1995
(51) Int. Cl.: A01B 33/08, E01C 23/088

(54) **Bodenbearbeitungsgerät mit Totmannsicherung**
Soil working apparatus with "dead man" security
Appareil pour le travail du sol avec sécurité d'homme mort

(30) Priorität: 27.06.1994 CH 2037/94
(43) Veröffentlichungstag der Anmeldung: 03.01.1996
(73) Patentinhaber: PAMAG AG, CH-8890 Flums (CH)
(72) Erfinder: Dummermuth, Paul, CH-4455 Zunzgen (CH)
(74) Vertreter: Feldmann, Clarence Paul

(56) Entgegenhaltungen:
- EP-A- 0 098 798
- US-A- 4 258 634
- US-A- 4 550 783
- US-A- 5 119 880

## Beschreibung

Die vorliegende Erfindung betrifft ein manuell verschiebbares Bodenbearbeitungsgerät gemäss Oberbegriff des Patentanspruches 1 (siehe EP-A-98798). Sie betrifft insbesondere eine Bodenfräsmaschine.

Bodenbearbeitungsgeräte werden zum Reinigen, Aufrauhen oder Abtragen von Beton-, Asphalt- oder Metalloberflächen eingesetzt. Als Bearbeitungswerkzeug weisen sie im allgemeinen eine käfigartige, motorisch getriebene Rotortrommel auf, auf deren Käfigachsen mehrere frei rotierende Schlaglamellen angeordnet sind. Die Rotortrommel ist so angeordnet, dass die rotierenden Schlaglamellen die Oberfläche des zu bearbeitenden Bodens abtragen. Die Einstellung der Bearbeitungstiefe erfolgt durch die Verstellung der relativen Rotortrommelachse zur Oberfläche des Bodens. Im allgemeinen geschieht diese Einstellung mittels höhenverstellbaren Laufrädern. Der Vorschub des Bodenbearbeitungsgerätes wird manuell durch die das Gerät bedienende Person erzeugt.

Bei einigen Ausführungsformen der bekannten Bodenbearbeitungsgeräte werden bei Nichtbenützung die höhenverstellbaren Räder abgesenkt oder hochgehoben. Dadurch wird die Rotortrommel entweder angehoben und das Gerät steht lediglich noch auf den Rädern auf dem Boden oder die Rotortrommel wird, nachdem ihr Antriebsmotor abgestellt worden ist, abgesenkt und das Gerät liegt nur auf der Rotortrommel auf.

Im Betriebszustand haben jedoch alle Bodenbearbeitungsgeräte infolge der Drehrichtung der Rotortrommel die Neigung davonzulaufen. Wird die Bodenbearbeitungsmaschine von der Bedienungsperson losgelassen, so führt sie unkontrollierte Bewegungen aus. Dies ist vorallem gefährlich, wenn die Bedienungsperson unerwartet und ungewollt die Bodenbearbeitungsmaschine loslässt, beispielsweise bei einem Unwohlsein, einer Unaufmerksamkeit oder einem Betriebsunfall.

Es ist deshalb Aufgabe der Erfindung, ein Bodenbearbeitungsgerät zu schaffen, die eine einfach realisierbare Totmannsicherung aufweist.

Diese Aufgabe löst ein Bodenbearbeitungsgerät mit den Merkmalen des Patentanspruches 1.

Das erfindungsgemässe Bodenbearbeitungsgerät weist eine einfach realisierbare Totmannsicherung auf, wobei auch bereits bestehende Maschinen mit dieser ausgerüstet werden können. Es muss im wesentlichen lediglich der Höhenverstellstab der Laufräder ausgewechselt werden und ein Arretierungsmittel am Gehäuse angebracht werden.
Das Bodenbearbeitungsgerät weist somit eine Blockierung der Laufräder im abgesenkten Zustand auf. In der einfachsten Ausführungsform besteht dieses Arretierungsmittel aus einem Anschlag, an dem mindestens eines der Laufräder ansteht und so blockiert ist. In einer anderen Ausführungsform besteht die Blockiervorrichtung aus einer Bremse, die in der untersten Lage der Laufräder automatisch auf ein Rad angepresst wird.
Diese Absenkung und Blockierung der Laufräder können einerseits bewusst durch den Benützer eingestellt werden, um das Bodenbearbeitungsgerät im Nichtbetriebszustand zu sichern. Andererseits werden sie für die Totmannsicherung eingesetzt. Dabei werden die Laufräder automatisch abgesenkt und blockiert. Dieser Automatismus wird durch die Zweiteilung des Höhenverstellstabes erreicht. Die zwei Teile sind durch ein Notauslöseelement gekoppelt, das im Notfall aktiviert wird, beispielsweise durch eine Reissleine. Die Kopplung wird im Notfall gelöst und der untere Teil des Stabes bewegt sich durch sein Eigengewicht und durch die Kraft einer auf den Höhenverstellstab wirkenden Feder hinunter, wodurch die Laufräder abgesenkt und blockiert werden.

In einer bevorzugten Ausführungsform ist der Höhenverstellstab mittels einem Notauslöseelement verbunden, der hakenförmig ausgebildet ist. Dadurch ist nicht nur eine einfache notfallmässige Entkopplung des Stabes möglich, sondern die zwei Teile können ebenso einfach wieder aneinander fixiert werden, so dass das Bodenbearbeitungsgerät wieder einsatzfähig ist.

In einer weiteren bevorzugten Ausführungsform ist zusätzlich zur automatischen Absenkung und Blockierung der Laufräder ein Schaltelement für den Antriebsmotor der Rotortrommel vorgesehen. Dieses ist mit der Kopplung des Höhenverstellstabes wirkverbunden. Wird der Stab getrennt, so wird der Antriebsmotor ebenfalls ausgeschaltet.

Weitere Ausführungsformen gehen aus den abhängien Patentansprüchen hervor.

In den beiliegenden Zeichnungen ist ein Ausführungsbeispiel des Erfindungsgegenstandes dargestellt und in der nachfolgenden Beschreibung erläutert. Es zeigen
- Figur 1: eine Ansicht von der Seite der für die Erfindung wesentlichsten Teile des Bodenbearbeitungsgerätes;
- Figur 2: eine Ansicht von der Seite der erfindungsgemässen Totmannsicherung und des Höhenverstellstabes mit teilweise geschnitten dargestellten Elementen und
- Figur 3: eine Ansicht von oben der in Figur 2 dargestellten Totmannsicherung.

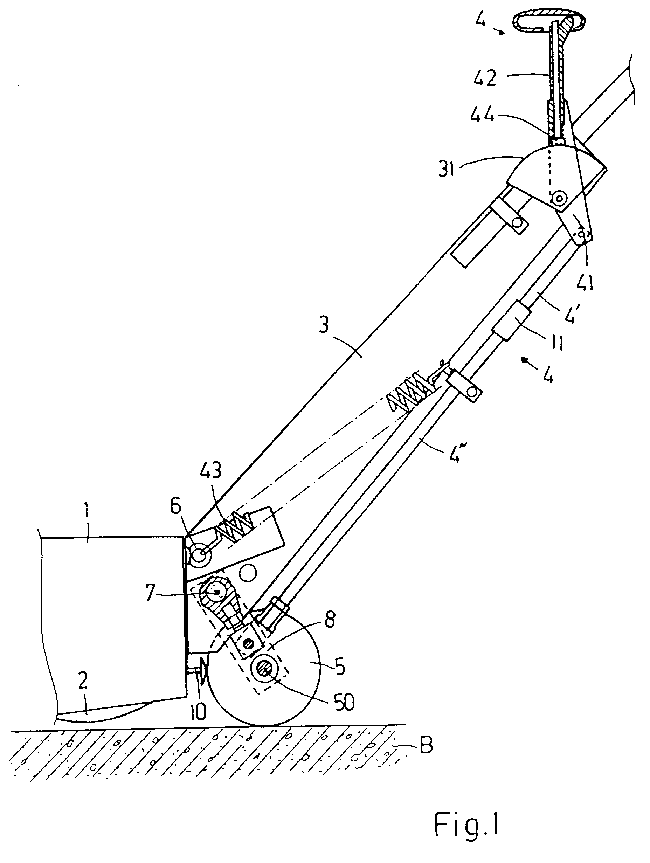

Das in Figur 1 dargestellte, erfindungsgemässe Bodenbearbeitungsgerät weist ein Gehäuse 1 auf, in dem eine Rotortrommel 2 drehbar gelagert ist. Die Rotortrommel besitzt frei drehbare Schlaglamellen, die im Betriebszustand auf den zu bearbeitenden Boden B aufschlagen. Am Gehäuse 1 ist eine Lande 3 angeordnet, die in einen hier nicht dargestellten Handgriff endet. Diese ist in diesem Ausführungsbeispiel nicht schwenkbar, sondern starr am Gehäuse 1 befestigt. Die Lande 3 dient zum Schieben des Bodenbearbeitungsgerätes, wobei die das Gerät bedienende Person den Vorschub manuell bestimmt.

Das Bodenbearbeitungsgerät weist zwei Stützrollen und zwei Laufräder 5 auf. Die zwei Stützrollen sind am Gehäuse 1 angeordnet, wobei sie sich an der von der Lande 3 entgegengesetzten Seite befinden. Sie sind nicht höhenverstellbar und in den Figuren nicht ersichtlich.
Die zwei Laufräder 5 befinden sich auf der der Lande 3 zugewandten Seite, wobei sie am Gehäuse 1 oder in einem unteren Bereich an der Lande 3 befestigt sind. Diese Laufräder 5 sind höhenverstellbar. Eine hierfür notwendige Höheneinstellvorrichtung ist an der Lande 3 angeordnet. Die Höheneinstellvorrichtung besteht im wesentlichen aus einem Höhenverstellstab 4, auch Zugstange genannt, der annähernd parallel zur Lande 3 verläuft. Der Höhenverstellstab 4 ist an seinem unteren Ende mit einem Schemel 8 verbunden, der um eine horizontale Schwenkachse 7 schwenkbar an der Lande 3 gehalten ist. Ebenfalls am Schemel 8 sind die Laufräder 5 angeordnet, wobei nur eines davon in der Zeichnung sichtbar ist. Wird der Höhenverstellstab 4 nach oben bewegt, so werden die Laufräder 5, beziehungsweise ihre Radachsen 50, um die horizontale Schwenkachse 7 geschwenkt, so dass sich die relative Lage der Radachsen 50 zum Boden B verändert und die Laufräder 5 somit höhenverstellt werden.

Der Höhenverstellstab 4 ist an seinem oberen Ende an einer Schwenkgabel 41 gesichert befestigt. Diese Schwenkgabel 41 ist Teil eines Höhenverstellhebels 42. An diesem Höhenverstellhebel 42 ist ein Lagepositionierungsmittel 44 angebracht. Dieses besteht bevorzugterweise aus einer gezahnten Platte, das federbelastet am Höhenverstellhebel 42 angeordnet ist. Dieses Lagepositionierungsmittel 44 steht im Eingriff mit einer an der Lande 3 angeordneten Zahnscheibe 31. Dadurch kann der Höhenverstellhebel 42 in verschiedene definierte Positionen gebracht und fixiert gehalten werden, wobei jede Position einer bestimmten Höheneinstellung der Laufräder 5 und damit einer bestimmten Arbeitstiefe entspricht.

Der Höhenverstellstab 4 ist mit einer Rückstellfeder 43 belastet, deren eines Ende im unteren Bereich an der Lande 3 oder wie in diesem Ausführungsbeispiel mittels einer Lasche 6 am Gehäuse 1 befestigt ist. Diese Rückstellfeder 43 hält den Höhenverstellstab 4 und damit die Laufräder 5 in einer unteren Endposition, sofern der Höhenverstellhebel 42 nicht in einer anderen definierten, oben beschriebenen Position gehalten ist. Die Laufräder 5 befinden sich dann in ihrer untersten Lage, wobei sie das Gehäuse 1 so weit anheben, dass die Rotortrommel 2 mindestens annähernd vollständig von dem zu bearbeitenden Boden B angehoben ist. In dieser Stellung, die in der Figur 1 dargestellt ist, steht das Bodenbearbeitungsgerät somit lediglich mit seinen abgesenkten Laufrädern 5 und mit den Stützrollen auf dem Boden B.
In einer oberen Endposition ist die Rückstellfeder 43 gestreckt, der Schemel 8 ist durch den Höhenverstellstab 4 um die horizontale Schwenkachse 7 geschwenkt, so dass die Laufräder 5 leicht angehoben sind, das Gehäuse 1 gesenkt ist und die Rotortrommel 2 auf dem zu bearbeitenden Boden B aufliegt.

Das erfindungsgemässe Bodenbearbeitungsgerät weist mindestens ein Mittel zur Arretierung von mindestens einem der Laufräder 5 auf. In einer bevorzugten Ausführungsform besteht das Arretierungsmittel 10 aus einem Anschlag, der am Gehäuse 1 angeordnet ist oder durch das Gehäuse 1 selber gebildet wird. In diesem Ausführungsbeispiel ist der Anschlag ein Bolzen, der im Bereich des in der Zeichnung sichtbaren Laufrades 5 am Gehäuse 1 angeordnet ist. Das Laufrad steht in seiner unteren Endposition an diesem Arretierungsmittel 10 an. Durch die Kraft der Rückstellfeder 43 wird das Laufrad 5 gegen das Arretierungsmittel 10 gepresst, so dass das Laufrad 5 durch dieses blockiert wird. Das zweite, hier nicht sichtbare Laufrad kann auf dieselbe Weise durch einen weiteren Anschlag blockiert werden.
Durch die Blockierung mindestens eines der Laufräder bei hochgestellter Rotortrommel ist das Bodenbearbeitungsgerät im Nichtbetriebszustand gesichert. Das Bodenbearbeitungsgerät kann keine unkontrollierten Bewegungen ausführen. Die Aufhebung dieser Sicherung erfolgt dadurch, dass die Laufräder 5 mittels der Höheneinstellvorrichtung 4 leicht angehoben werden, die Rotortrommel also in ihre Betriebslage abgesenkt wird. Das vorher blockierte Laufrad 5 wird dadurch vom Arretierungsmittel 10 weggeschwenkt und kann sich nun frei drehen und auf dem Boden B abrollen. Das Bodenbearbeitungsgerät ist wieder einsatzfähig.

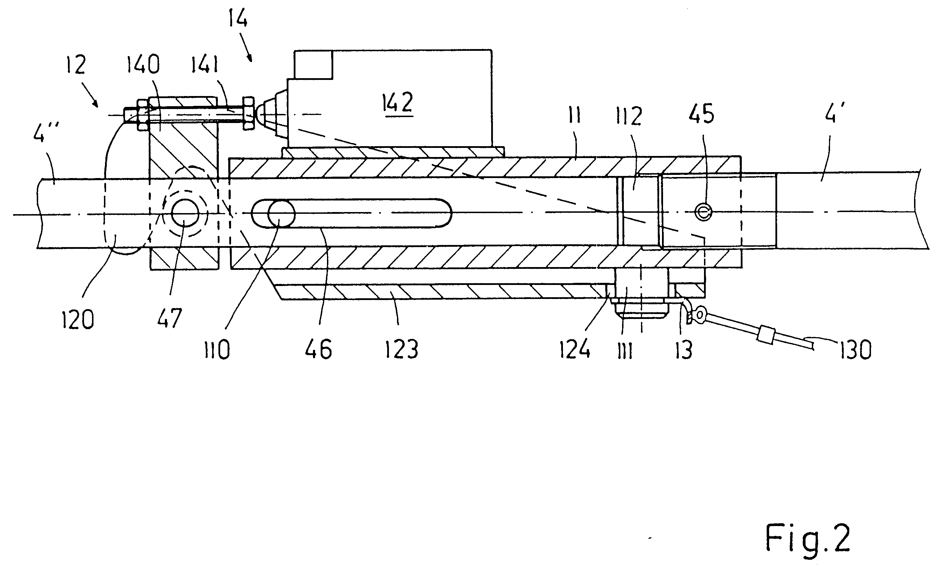

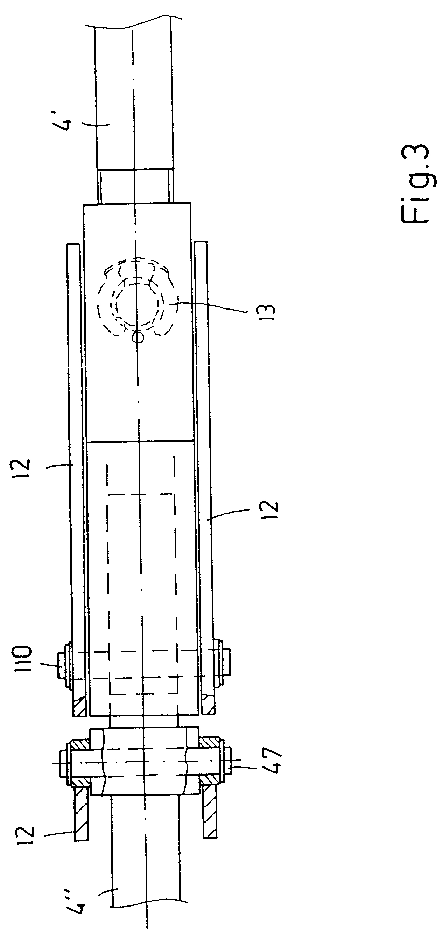

Diese Absenkbarkeit und gleichzeitige Arretierbarkeit der Laufräder werden nicht nur, wie oben beschrieben, für die Sicherung des Gerätes im Nichtbetriebszustand verwendet, sondern sie werden ebenfalls für die Totmannsicherung ausgenützt. Der Höhenverstellstab 4 ist hierfür, wie in den Figuren 2 und 3 ersichtlich, zweigeteilt. Die Trennstelle des Höhenverstellstabes 4 befindet sich, wie in Figur 1 ersichtlich, bevorzugterweise in dessem oberen Bereich.
Der Höhenverstellstab 4 besteht somit aus einem oberen Teil 4' und einem unteren Teil 4''. Der obere Teil 4' ist mit der Schwenkgabel 41 gekoppelt. Der untere Teil 4'' ist mit dem Schemel 8 verbunden, während an ihm gleichzeitig die Zugfeder 43 angreift. Die zwei benachbarten Enden des unteren und oberen Teiles sind in einer Führungshülse 11 gelagert. Dabei ist der obere Teil 4' des Höhenverstellstabes über einen Verbindungssplint 45 fest mit der Führungshülse 11 verbunden. Der untere Teil 4'' des Höhenverstellstabes ist in der Führungshülse 11 verschiebbar gelagert, wobei er von ihr geführt ist. Damit der untere Teil nur innerhalb der Führungshülse 11 verschiebbar ist, also nicht vollständig von ihr getrennt werden kann, weist er ein Langloch 46 auf, das parallel zur Stabachse verläuft. Die Führungshülse 11 besitzt als Gegenstück einen Anschlag in Form eines Nockens oder Bolzens 110, der in dieses Langloch 46 eingreift. Der untere Teil 4'' des Höhenverstellstabes ist somit lediglich entlang der Länge des Langloches 46 in der Führungshülse 11 verschiebbar. Eine Umkehrung dieser Anordnung ist ebenfalls möglich. Der untere Teil ist fest mit der Führungshülse verbunden und der obere Teil ist bezüglich dieser Elemente verschiebbar. Ebenso dient die Führungshülse im wesentlichen der Führung des verschiebbaren Teiles. Andere Lösungen derartiger Führungen sind möglich.

In diesem Ausführungsbeispiel grenzen die Enden der Teile 4',4'' des Höhenverstellstabes 4 nicht direkt aneinander, sondern sie sind durch ein Pufferelement 112 voneinander getrennt.

Die Teile des Höhenverstellstabes 4 werden durch ein Notauslöseelement 12 zusammengehalten. In diesem bevorzugten Ausführungsbeispiel besteht dieses aus zwei parallel beabstandet zueinander angeordneten Haken 120, die mittels einer Verbindungsplatte 123 verbunden sind. In der Figur 2 ist nur einer der Haken 120 ersichtlich, da der andere deckungsgleich auf der anderen Seite des Höhenverstellstabes liegt. Die Verbindungsplatte 123 befindet sich auf der von der Krümmung der Haken 121 abgewandten Seite. Sie weist in ihrem hinteren, der Krümmung der Haken entfernten Bereich eine Oeffnung 124 auf. Diese Oeffnung 124 ist von einem Halterungsbolzen 111 durchstossen, der in der Führungshülse 11 fixiert ist und somit auch mit dem oberen Teil 4' des Höhenverstellstabes fest verbunden ist. Der Halterungsbolzen 111 weist eine umlaufende Nut auf. In dieser Nut ist eine einseitig offene Stützscheibe 13 eingelegt. Auf dieser Stützscheibe 13 liegt mindestens ein Teil der Verbindungsplatte 123 auf, genauer gesagt mindestens ein Teil des die Oeffnung 124 umgebenden Randes. Der hintere Bereich des Notauslöseelementes 12 wird somit durch die Stützscheibe 13 gelagert. Des weiteren ist das Notauslöseelement 12 schwenkbar durch den Bolzen 110 der Führungshülse gehalten, wie in Figur 3 ersichtlich.

Das Notauslöseelement 12 umgibt somit den Höhenverstellstab 4 beziehungsweise die Führungshülse 11 teilweise. Dabei sind die zwei Haken 120 auf gegenüberliegenden Seiten des Höhenverstellstabes 4 angeordnet. Damit das Notauslöseelement 12 den unteren Teil 4'' des Höhenverstellstabes mit dessem oberen Teil 4' verbindet, ist am unteren Teil 4'' ein Arretierungsbolzen 47 angebracht, der diesen durchstösst, so dass er auf beiden Seiten des Stabes vorsteht. Die zwei Haken 120 des Notauslöseelementes 12 stehen mit je einem Ende des Arretierungsbolzens 47 im Eingriff. Der vordere Bereich des Notauslöseelementes 12 ist somit indirekt am unteren Teil 4'' des Höhenverstellstabes 4 eingehakt. In diesem Ausführungsbeispiel ist beidseitig des Stabes ein Haken vorhanden. Es sind jedoch auch Lösungen möglich, bei denen nur auf einer Seite ein Haken angebracht ist.

Im Notfall wird das Notauslöseelement 12 wie folgt aktiviert:
Die einseitig offene Stützscheibe 13, auf der der hintere Bereich des Notauslöselementes 12 aufliegt, wirkt als Sicherungselement. Hierfür ist an ihm eine Reissleine 130 angebracht, die mit der Bedienungsperson verbunden ist. Entfernt sich die Bedienungsperson vom Bodenbearbeitungsgerät, so zieht sie die Reissleine 130 mit sich und die Stützscheibe 13 wird aus der Nut herausgezogen. Das Notauslöseelement 12 fällt, da es nicht mehr durch das Sicherungselement 13 gestützt ist, herunter. Das Notauslöseelement 12 schwenkt dabei um den Bolzen 110 der Führungshülse 11 und die Haken 120 lösen sich vom Arretierungsbolzen 47. Die Verbindung zwischen dem unteren und oberen Teil des Höhenverstellstabes 4 ist gelöst. Durch sein Eigengewicht und die Zugkraft der Feder 43 fällt der untere Teil 4'', geführt von der Führungshülse 11, hinunter und die Laufräder 5 werden automatisch abgesenkt. Mindestens ein Laufrad steht am Arretierungsmittel 10 an und wird blockiert. Die Rotortrommel 2 dreht nun frei, da sie vom Boden B angehoben ist. Das Bodenbearbeitungsgerät kann keine unkontrollierten Bewegungen ausführen und ist somit gesichert.

In diesem Ausführungsbeispiel ist zudem eine Notauschaltung für den Antriebsmotor der Rotortrommel 2 vorgesehen. Das Notausschaltungselement 14 ist mit dem Notauslöseelement 12 wirkverbunden. Das Notausschaltungselement 14 besteht aus einer Stellschraube 141, die in einem Reiter 140 auf dem unteren Teil 4'' des Höhenverstellstabes 4 eingeschraubt ist. Bevorzugterweise ist der Reiter mit dem bereits beschriebenen Arretierungsbolzen 47 befestigt, indem er von diesem durchdrungen ist. Auf der Führungshülse 11, andernfalls auf dem oberen Teil 4' des Höhenverstellstabes 4, ist ein Kontaktschalter 142 angeordnet, der mit dem Antriebsmotor wirkverbunden ist. Wenn die Teile des Höhenverstellstabes 4 mittels den Haken 120 aneinandergekoppelt sind, so betätigt die Stellschraube 141 den Kontaktschalter 142, so dass dieser aktiviert ist. Der Antriebsmotor ist betriebsfähig. Wird das Notauslöseelement 12 betätigt, das heisst die Laufräder abgesenkt und blockiert, so werden auch die Stellschraube 141 und der Kontaktschalter 142 voneinander getrennt und beispielsweise wird die Speiseleitung unterbrochen. Als Folge davon schaltet der Antriebsmotor ab. Die Anordnung von Kontaktschalter und Stellschraube kann ebenfalls umgekehrt werden, so dass der Kontaktschalter an der Führungshülse angeordnet ist.

Wenn das Bodenbearbeitungsgerät nach einer derartig erfolgten Notausschaltung wieder in Betrieb genommen werden soll, so ist dies auf einfache Weise durchführbar. Es müssen lediglich die Haken des Notauslöseelementes 12 wieder eingehänkt und die Stützscheibe 13 unterlegt werden. Hierfür wird der Höhenverstellhebel 42 ganz in die Bremsstellung zurückgezogen. Die beiden Teile des Höhenverstellstabes 4',4'' werden dadurch zusammengeschoben, so dass das Notauslöseelement 12 eingeschwenkt und mit der Stützscheibe gesichert werden kann. Dadurch wird auch automatisch der Kontakt für den Antriebsmotor wiederhergestellt und das Bodenbearbeitungsgerät ist wieder einsatzfähig.

## Patentansprüche

1. Manuell verschiebbares Bodenbearbeitungsgerät, das ein Gehäuse (1), eine motorisch getriebene Rotortrommel (2), die in dem Gehäuse (1) gelagert ist, eine Lande (3) und mittels eines federbelasteten (43) Höhenverstellstabes (4) höhenverstellbare Laufräder (5) aufweist, wobei die Laufräder (5) in einer unteren annähernd federspannungsfreien Endposition abgesenkt und die Rotortrommel (2) annähernd vollständig von dem zu bearbeitenden Boden (B) angehoben sind, dadurch gekennzeichnet, dass der Höhenverstellstab (4) zweigeteilt ist, wobei ein unterer federbelasteter Teil (4'') des Höhenverstellstabes (4) mittels einem Notauslöseelement (12) an einen oberen Teil (4') des Höhenverstellstabes (4) lösbar gekoppelt ist, dass die Kopplung im Notfall automatisch lösbar ist und dass am Gehäuse ein Arretierungsmittel (10) zur Blockierung von mindestens einem der abgesenkten Laufräder (5) vorgesehen ist, so dass sich bei gelöster Kopplung die Laufräder (5) in ihrer unteren Endposition befinden und mindestens eines davon blockiert ist.

2. Bodenbearbeitungsgerät nach Anspruch 1, dadurch gekennzeichnet, dass im Kopplungsbereich die Teile (4',4'') des Höhenverstellstabes (4) in einer Führungshülse (11) gelagert sind, wobei ein erster Teil im losgekoppelten Zustand in der Führungshülse (11) geführt verschiebbar ist und der zweite Teil fest mit der Führungshülse (11) verbunden ist.

3. Bodenbearbeitungsgerät nach Anspruch 2, dadurch gekennzeichnet, dass der verschiebbare Teil des Höhenverstellstabes (4) ein Langloch (125) aufweist, das parallel zur Stabachse verläuft und in das ein Bolzen (110) der Führungshülse (11) eingreift.

4. Bodenbearbeitungsgerät nach Anspruch 2 oder 3, dadurch gekennzeichnet, dass der erste Teil der untere Teil und der zweite Teil der obere Teil ist.

5. Bodenbearbeitungsgerät nach einem der vorhergehenden Ansprüche, dadurch gekennzeichnet, dass das Notauslöseelement (12) hakenförmig ausgebildet ist, dass es im gekoppelten Zustand bei einem an einem Teil des Höhenverstellstabes (4) angebrachten Arretierungsbolzen (47) eingehakt ist und mit dem anderen Teil des Höhenverstellstabes (4) über ein mit einer Reissleine (130) gekoppelten Sicherungselement (13) lösbar verbunden ist.

6. Bodenbearbeitungsgerät nach Anspruch 5, dadurch gekennzeichnet, dass das Sicherungselement eine einseitig offene Stützscheibe (13) ist, auf der das hakenförmige Notauslöseelement (12) im gekoppelten Zustand aufliegt.

7. Bodenbearbeitungsgerät nach einem der Ansprüche 5 oder 6, dadurch gekennzeichnet, dass das Notauslöseelement (12) aus zwei parallel zueinander beabstandet angeordneten, mittels einer Verbindungsplatte (123) verbundenen Haken (120) besteht, wobei die Haken (120) auf gegenüberliegenden Seiten des Höhenverstellstabes (4) angeordnet sind und der Arretierungsbolzen (47) den Höhenverstellstab (4) beidseitig durchstösst.

8. Bodenbearbeitungsgerät nach einem der Ansprüche 5 bis 7, dadurch gekennzeichnet, dass der Arretierungsbolzen (47) am unteren Teil (4'') des Höhenverstellstabes (4) angeordnet ist.

9. Bodenbearbeitungsgerät nach einem der vorhergehenden Ansprüche, dadurch gekennzeichnet, dass mit dem Notauslöseelement (12) ein Notausschaltungselement (14) für den Antriebsmotor wirkverbunden ist.

10. Bodenbearbeitungsgerät nach Anspruch 9, dadurch gekennzeichnet, dass das Notausschaltungselement (14) für den Antriebsmotor aus einer Stellschraube (141) und einem Kontaktschalter (142) besteht, die auf verschiedenen Teile des Höhenverstellstabes (4) angebracht sind und wobei sie sich lediglich im gekoppelten Zustand kontaktieren.

## Claims

1. Manually displaceable implement for ground treatment, comprising a housing (1), a motor-driven rotor drum (2) rotatably seated in the housing (1), a connecting piece (3), and running wheels (5) which are height-adjustable by means of a spring-loaded (43) height adjustment rod (4), said running wheels (5) being movable into a lower end position which is almost free of spring tension and the rotor drum (2) being substantially completely lifted off the ground (B) to be treated, characterized in that the height adjustment rod (4) being divided into two parts, a lower, spring-loaded part (4'') of the height adjustment rod (4) being releasably connected by an emergency release element (12) to an upper part (4') of the height adjustment rod (4), that the connection is automatically released in an emergency, and that blocking means (10) for blocking at least one lowered running wheel (5) are provided and disposed on the housing (1), whereby when the connection is released, the running wheels (5) are in the lower end position and at least one of the running wheels (5) is blocked.

2. Implement for ground treatment in accordance with claim 1, characterized in that the two parts (4', 4'') of the height adjustment rod (4) are seated in a guide sleeve (11) in an area of their connection, whereby in a disconnected state, a first part is guidedly displaceable in the guide sleeve (11) and the second part is fixedly connected to the guide sleeve (11).

3. Implement for ground treatment in accordance with claim 2, characterized in that the displaceable part of the height adjustment rod (4) has an elongated hole (46), said elongated hole (46) extending parallel in respect to the rod axis and engaged by a bolt (110) of the guide sleeve (11).

4. Implement for ground treatment in accordance with claim 2 or 3, characterized in that the first part corresponds to the lower part (4'') and the second part corresponds to the upper part (4').

5. In an implement for ground treatment in accordance with one of the preceding claims, characterized in that the emergency release element (12) comprises a hook which, in a connected state, is hooked on an arresting bolt (47) disposed on a first part of the height adjustment rod (4) and is releasably connected to the second part of the height adjustment rod (4) by a safety element (13), which is connected to a ripcord (130).

6. Implement for ground treatment in accordance with claim 5, characterized in that the safety element comprises a support disk (13) open on one side, on which the hook-shaped emergency release element (12) rests in the connected state.

7. Implement for ground treatment in accordance with claims 5 or 6, characterized in that the emergency release element (12) comprises two hooks (120) arranged parallel in respect to each other at a distance from each other and connected by a connecting plate (123), the hooks (120) arranged on oppositely located sides of the height adjustment rod (4) and the arresting bolt (47) penetrating through the height adjustment rod (4) on both sides.

8. Implement for ground treatment in accordance with claims 5 to 7, characterized in that the arresting bolt (47) is disposed on the lower part (4'') of the height adjustment rod (4).

9. Implement for ground treatment in accordance to one of the preceding claims, wherein an emergency shutoff element (14) for the drive motor is operatively connected to the emergency release element (12).

10. Implement for ground treatment in accordance with claim 9, characterized in that the emergency shutoff element (14) for the drive motor comprises an adjusting screw (141) and a contact switch (142), each attached to a different part of the height adjustment rod (4), whereby they are only in contact with each other in the connected state.

## Revendications

1. Appareil de traitement du sol déplaçable manuellement qui présente un châssis (1), un tambour-rotor (2) entraîné par un moteur, qui est monté dans le châssis, un manche (3) et des roues porteuses (5) réglables en hauteur au moyen d'une tige de réglage de hauteur (15) sollicitée par ressort (4), dans lequel les roues porteuses (5) sont abaissées dans une position d'extrémité inférieure sensiblement sans tension de ressort et le tambour-rotor (2) est relevé de façon sensiblement complète du sol (B) à traiter, caractérisé en ce que la tige de réglage de hauteur (4) est en deux parties, une partie inférieure (4''), sollicitée par ressort, de la tige (4) de réglage de hauteur étant couplée de façon détachable à une partie supérieure (4') de la tige (4) de réglage de hauteur au moyen d'un élément (12) de séparation en cas de besoin, en ce que le couplage est détachable automatiquement en cas de besoin et en ce qu'est prévu un moyen d'immobilisation (10), fixé au châssis, pour le blocage d'au moins une des roues porteuses (5) abaissées, de sorte que lors d'un relâchement du couplage, les roues porteuses (5) se trouvent dans leur position d'extrémité inférieure et au moins l'une d'elles est bloquée.

2. Appareil de traitement du sol selon la revendication 1, caractérisé en ce que, dans la zone de couplage, les parties (4', 4'') de la tige (4) de réglage de hauteur sont montées dans une douille (11) de guidage, une première partie étant montée coulissante, en couplage lâche, dans la douille de guidage (11), et la deuxième partie étant montée fixement à la douille de guidage (11).

3. Appareil de traitement du sol selon la revendication 2, caractérisé en ce que la partie coulissante de la tige (4) de réglage de hauteur présente une lumière (125) qui s'étend parallèlement à l'axe de la tige et qui est en prise avec un boulon (110) de la douille de guidage (11).

4. Appareil de traitement du sol selon la revendication 2 ou 3, caractérisé en ce que la première partie est la partie inférieure et la deuxième partie est la partie supérieure.

5. Appareil de traitement du sol selon l'une des revendications précédentes, caractérisé en ce que l'élément (12) de séparation en cas de besoin est réalisé en forme de crochet, en ce que, en condition de couplage, il est accroché à un boulon d'immobilisation (47) fixé à une partie de la tige (4) de réglage de hauteur, et en ce qu'il est relié de façon détachable à l'autre partie de la tige (4) de réglage de hauteur par l'intermédiaire d'un élément de sécurité (13) couplé à une corde de traction ou de déchirure (130).

6. Appareil de traitement du sol selon la revendication 5, caractérisé en ce que l'élément de sécurité est un disque d'appui (13) ouvert d'un côté sur lequel s'appuie, en condition de couplage, l'élément (12), en forme de crochet, de séparation en cas de besoin.

7. Appareil de traitement du sol selon l'une des revendications 5 ou 6, caractérisé en ce que l'élément (12) de séparation en cas de besoin consiste en deux crochets (120) parallèles, à distance l'un de l'autre et reliés par une plaque de liaison (123), les crochets (120) étant disposés suivant des côtés opposés de la tige (4) de réglage de hauteur et le bouton d'immobilisation (47) traversant la tige (4) de réglage de hauteur des deux côtés.

8. Appareil de traitement du sol selon l'une des revendications 5 à 7, caractérisé en ce que le boulon d'immobilisation (47) est fixé à la partie inférieure (4'') de la tige (4) de réglage de hauteur.

9. Appareil de traitement du sol selon l'une des revendications précédentes, caractérisé en ce qu'un élément d'arrêt en cas de besoin (14) du moteur d'entraînement est relié de façon opérationnelle à l'élément (12) de séparation en cas de besoin.

10. Appareil de traitement du sol selon la revendication 9, caractérisé en ce que l'élément (14) d'arrêt en cas de besoin pour le moteur d'entraînement consiste en une vis de réglage (141) et en un interrupteur à contact (142) qui sont fixés à des parties différentes de la tige (4) de réglage de hauteur et qui sont simplement en contact en condition de couplage.
